# EUROPEAN PATENT APPLICATION

(11) **EP 0 539 728 A1**
(43) Date of publication of application: **05.05.1993**
(21) Application number: 92116349.9
(22) Date of filing: 24.09.1992
(51) Int. Cl.: F16L 47/00

(54) **Gas riser apparatus and method of assembling such a riser**

(30) Priority: 24.09.1991 US 764458
(71) Applicant: AMERICAN METER HOLDINGS CORPORATION, Wilmington, Delaware (US)
(72) Inventor: Lorenz, James M., Madison, Ohio 44057 (US)
(74) Representative: Zenz, Joachim Klaus, Dipl.-Ing.

(57) **Abstract**

An improved gas riser comprises a pipe nipple (54), casing (60), adaptor sleeve (58), tube (104), and stiffener (94). The adaptor sleeve (58) features an internal stop which accurately positions an end of the plastic tube (104) before the tube is plastically deformed into grooves (112) in an internal surface of the adaptor sleeve (58). Each of the first (106) and second ends (108) of the adaptor sleeve (58) can be manufactured in different diameters to fit pipe nipples and casings that are required by different code regulations. The method of assembling the gas riser comprises inserting a first end (106) of the adaptor sleeve (58) into a second end (68) of a pipe nipple (54), inserting a second end (108) of the adaptor sleeve (58) into a first end of the casing (60), welding the second end (68) of the pipe nipple (54) and the first end of the casing (60) to the adaptor sleeve (58), inserting a stiffener (94) into a tube end (104,126), inserting the tube end into the adaptor sleeve (58), and pulling a mandrel (140) through the assembly, and forming a seal by plastically deforming the stiffener (94) and the tube (104) into grooves (112) on an interior surface of the adaptor sleeve (58).

## Description

### Background of the Invention

### I. Field of Invention

This application is directed to an apparatus and method for conducting pressurized fluid from a source of supply to a delivery point through a metal-to-plastic transition fitting. More particularly, this invention relates to a gas riser apparatus which is used to conduct natural gas from a main to a point of use through plastic and metal conduits, as well as a method of assembling such a riser.

### II. Description of Related Art

It has been known in the past to utilize gas risers which comprise at one end a metal conduit, which is adapted to be connected to a gas meter manifold, and at the other end a plastic pipe, which is adapted to be connected to an underground plastic pipe. The metal pipe and plastic pipe are joined together through a seal. Examples of such structures include U.S. Patent No. 3,987,820 to Alewitz and U.S. Patent No. 4,482,170 to Jacobson, et al.

Although these and other structures have functioned somewhat satisfactorily, advantages have been obtainable through improvements.

One problem encountered by prior art structures stemmed from the variety of code requirements of various city and state governments. Because code requirements varied among various governing bodies, different risers had to be fabricated to meet the requirements for each code.

Another problem in prior art risers was the effectiveness of the metal-to-plastic joint. If the joint was ineffective, natural gas from the plastic pipe could seep from the joint into the surrounding area, creating the risk of damage and injury. One of the problems in creating an effective joint stemmed from difficulties in locating the different components of the joint in their proper relation to each other.

The present invention contemplates a new and improved gas riser apparatus and method which provides better performance and more advantageous overall results while overcoming some of the foregoing problems.

### Summary of the Invention

In accordance with the present invention, a new and improved gas riser is provided which is adapted to join a gas meter with an underground plastic pipe, as well as a method for assembling the riser.

More particularly, in accordance with the invention, the riser comprises a pipe nipple, casing, adaptor sleeve, tube, and stiffener. A method of assembling the riser comprises the steps of inserting a first end of said adaptor sleeve into a second end of said pipe nipple, inserting a second end of said adaptor sleeve to a first end of said casing, welding said second end of said pipe nipple and said first end of said casing to said adaptor sleeve, inserting a stiffener into a first end of a tube, pushing said first end of said tube into said second end of said casing until said stiffener contacts the internal wall of said adaptor sleeve, and pulling a mandrel through said tube, past said first end of said tube, past said stiffener and adaptor sleeve, and out said second end of said pipe nipple, thereby deforming said tube outwardly and into locking engagement with grooves on a inner surface of said adaptor sleeve.

According to another aspect of the invention, the riser comprises a metal pipe having first and second pipe ends and having grooves on an inner surface, and further comprising a tube. The method of assembling the gas riser comprises the steps of passing an end of a rod into said second pipe end and out of said first pipe end, passing said rod through an annular collar, passing said rod through a length of said tube, attaching a mandrel to said rod end, the outer diameter of said mandrel being greater than the inner diameter of said annular collar, pushing a first tube end into said first pipe end until said first tube end is positioned adjacent said grooves on said inner surface of said pipe, and pulling said mandrel through said tube, out of said first tube end, and out of said first pipe end, thereby outwardly deforming said annular collar and said first tube end into sealing arrangement with said grooves on said inner surface of said pipe.

In accordance with a further aspect of the invention, the adaptor sleeve for joining pipe nipples and casings into gas risers comprises a generally cylindrical tube having a first end and a second end separated by a flange. The outside diameter of the first end is sized to fit within an inside diameter of an associated pipe nipple. The outside diameter of said second end being sized to fit within an inside diameter of an associated casing. The radial distance between an outer surface of said first end and an outermost edge of said flange is approximately equal to a wall thickness of said pipe nipple. The radial distance between an outer surface of said second end and an outermost edge of said flange is approximately equal to a wall thickness of said casing. An interior surface of said adaptor sleeve comprises grooves. An interior surface of said adaptor sleeve has an O-ring groove which selectively receives an associated O-ring. The interior surface of said adaptor sleeve also comprises a stiffener groove which selectively receives an associated annular stiffener. The adaptor sleeve also comprises an internal stop surface which selectively receives a first end of an associated tube to fix the location of said first end of said tube relative to said flange.

One advantage of the present invention is the provision of a new and improved gas riser.

Another advantage of the invention is that various sizes and types of pipe nipples can be used with the riser assembly by selection of a properly-sized adaptor sleeve without having to change other parts of the riser assembly.

Another advantage of the present invention is cost savings obtainable by using different wall thicknesses in the casing and the pipe nipple. For example, some municipalities may require a wall thickness in the pipe nipple of a certain dimension, but will allow a casing of a thinner wall thickness. As such, cost advantages are obtainable by choosing an adaptor sleeve which accommodates the thick wall dimension of the pipe nipple but allows a casing with a thinner wall dimension. Therefore, a less expensive construction can be utilized.

Another advantage of the present invention is an improved seal between the metal and plastic components.

Another advantage of the present invention is its low cost, high quality manufacturing method.

Still another advantage of the invention is greater uniformity, and therefore quality, in the metal-to-plastic joint due to the accurate placement of the first end of the tube by registering it against the internal stop surface.

Still other benefits and advantages of the present invention will become apparent to those skilled in the art upon a reading and understanding of the following detailed specification.

### Brief Description of the Drawings

The invention may take physical form in certain parts and arrangement of parts, a preferred embodiment of which will be described in detail in this specification and illustrated in the accompanying drawings which form a part hereof and wherein:
FIGURE 1 is a schematic view showing one example of a prior art apparatus for providing for the transmission of pressurized gas from a main to a meter at a residence;
FIGURE 2 is a schematic view showing the attachment of a prior art gas riser apparatus to a gas meter and to an underground conduit;
FIGURE 3 is an elevational view, partly in section, showing a gas riser according to the invention;
FIGURE 4 is an enlarged view of a portion of the gas riser shown in FIGURE 3;
FIGURE 5 is an exploded view of the riser assembly shown in FIGURE 3;
FIGURE 6 is an enlarged view of the adaptor sleeve according to the invention;
FIGURE 7 is a schematic, elevational view of a portion of the riser according-to the invention along with a mandrel as is used in the manufacturing method;
FIGURE 8 is an enlarged view of an adaptor sleeve according to an alternate embodiment of the invention;
FIGURE 9 is an enlarged view of a portion of a gas riser shown in FIGURE 3 but which incorporates the alternate embodiment adaptor sleeve shown in FIGURE 8;
FIGURE 10 is an exploded view of the alternate embodiment of the invention shown in FIGURE 9; and,
FIGURE 11 is an enlarged cross-sectional view of a metal to plastic transition fitting according to the invention.

### Description of the Preferred Embodiment

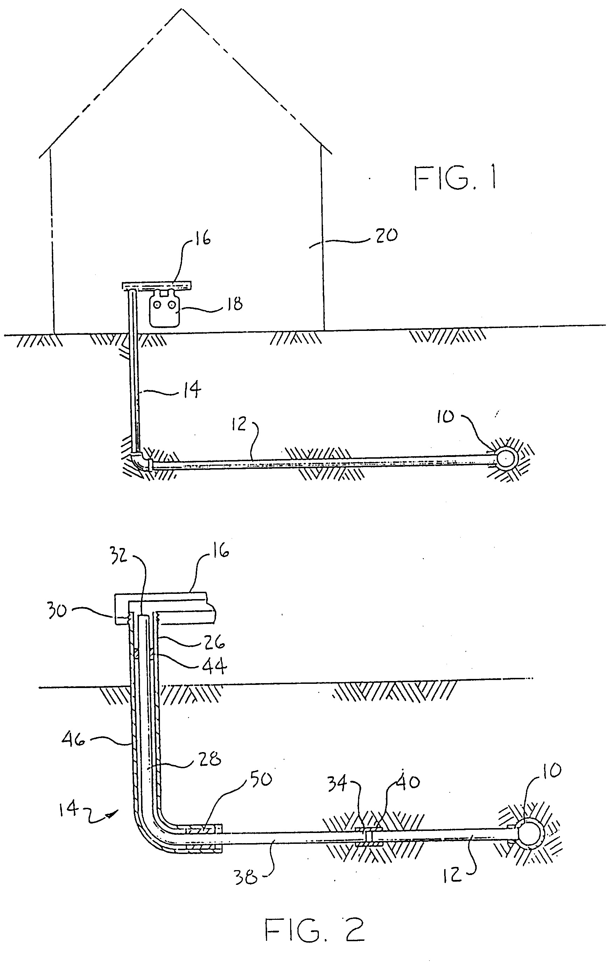

Referring now to the drawings wherein the showings are for purposes of illustrating a preferred embodiment of the invention only, and not for purposes of limiting the same, FIGURE 1 is a schematic representation of a typical apparatus for providing natural gas service from a main **10** through an underground pipe **12**, into a vertical pipe **14**, and a gas manifold **16** and eventually through a gas meter **18** such as is typically associated with a residential home **20**.

With reference to FIGURE 2, a prior art gas riser is disclosed. The riser is essentially a double wall conduit comprising an outer metallic pipe **26** and an inner plastic pipe **28**. The outer metallic pipe **26** is connected to the gas manifold **16** by way of a threaded connection **30**. The inner plastic pipe **28** has a first end **32** and a second end **34**. The portion of the inner plastic pipe **28** near the second end **34** is termed a pigtail **38**. When the riser is manufactured, the pigtail **38** may be as long as needed to meet customer specifications or to comply with applicable codes. The second end **34** of the inner plastic pipe **28** is connected to the underground plastic pipe **12** by means of any appropriate coupling means, such as a union coupling **40** through a typical solvent-welded connection.

A challenge met by the typical gas riser is that of a metal-to-plastic seal: Applicable code requirements of most city and state governments prohibit the transmission of natural gas in plastic pipe above ground level unless the plastic pipe is protected, such as by a metal conduit. Exposed plastic pipe above ground level could conceivably be damaged by lawn mowers, vehicles, and the like. Accordingly, a common code requirement is that, where plastic pipe for transmitting gas extends above ground level, the pipe must be encased with a metallic conduit or pipe.

The prior art gas riser has been directed to the code requirement of a plastic pipe encased in a metal conduit while providing convenience to the installers in the field. The metal-to-metal seal at the threaded connection **30**, FIGURE 2 is easy to make, as is the plastic-to-plastic joint via union coupling **40**. However, the metal-to-plastic seal joining the inner plastic pipe **28** to the outer metallic pipe **26** has proved to be more of a challenge. Typically, such a seal **44** is located in the riser **14** above ground level. The seal **44** prevents gas from seeping out of first end **32** of the inner plastic pipe **28** and down through the annular space **46** between inner plastic pipe **28** and outer metallic pipe **26**. Further, a lower seal **50** is incorporated in some applications to prevent water and dirt from entering into annular space **46** below ground level.

In addition to the above discussion regarding gas risers, the present invention may also be utilized wherever a metal-to-plastic transition joint is required. For example, by forgoing the metal casing of the hereinafter disclosed gas riser, a useful metal-to-plastic transition fitting which can be applicable to many applications is disclosed. Although the metal-to-plastic transition fitting will be clearly disclosed in the following specification, the discussion will be made in terms of a gas riser since a gas riser is the primary application to which applicant's invention is directed.

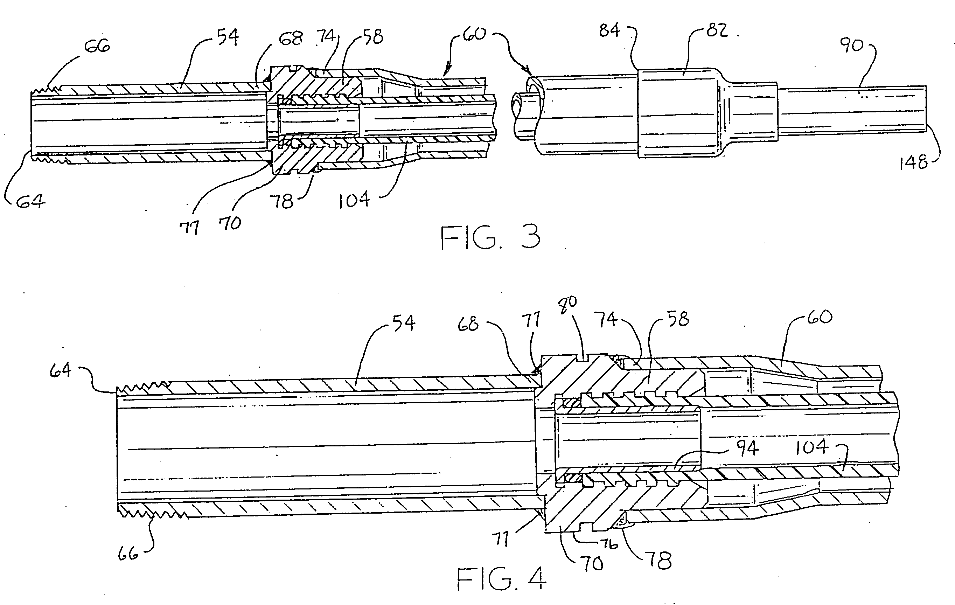

With reference now to FIGURES 3-6, the present gas riser of this invention will now be described.

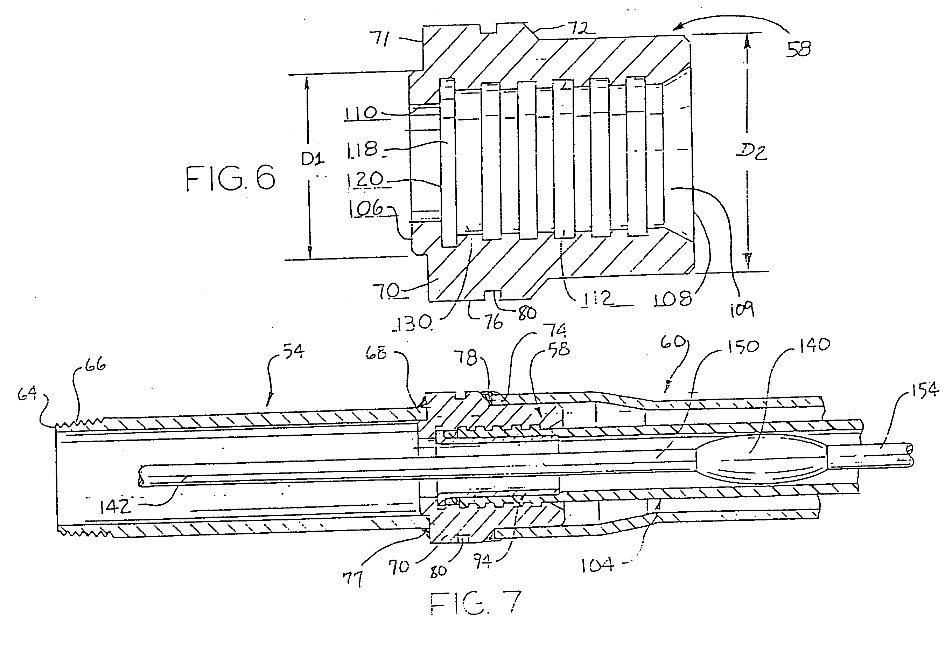

An outer metallic casing of the gas riser of the present invention is made up of three elements, a pipe nipple **54**, an adaptor sleeve **58**, and a casing **60**. A first end **64** of the pipe nipple **54** has external threads **66** which threadingly engage complementary threads on an associated gas manifold **16** such as shown in FIGURE 2. A second end **68** of the pipe nipple **54** selectively abuts a pipe nipple side **71** of adaptor sleeve flange **70** of adaptor sleeve **58**. A first end **74** of casing **60** abuts a casing side **72** of flange **70**. As shown in FIGURE 6, the casing side **72** of the flange **70** angles outwardly at approximately 45°.

The second end **68** of the pipe nipple **54** is attached to the adaptor sleeve **58** in a weld **77**. Because the pipe nipple **54** contains natural gas in riser applications, thus weld **77** is carefully leak-tested.

On the other hand, weld **78** which the attaches adaptor sleeve **58** to the first end **74** of the casing **60** need not be leak-tested. Therefore, the casing side **72** of the flange **70** is angled to facilitate the making of the weld **78**. A slip seal **82** closes the second end **84** of the casing **60** and provides sealing of the casing **60** and the pigtail **90**.

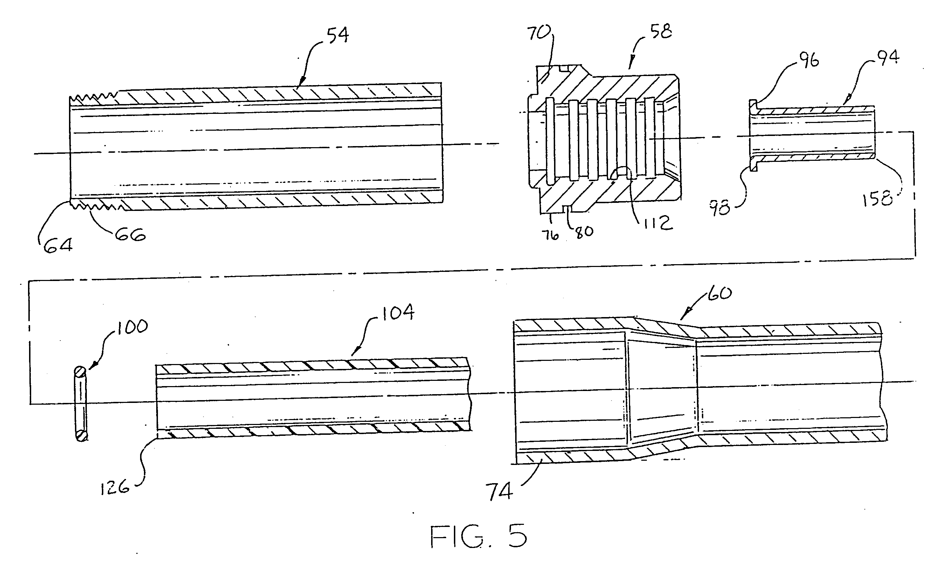

With reference to FIGURE 5, components comprising the metal-to-plastic joint are shown. In addition to the pipe nipple **54**, adaptor sleeve **58**, and casing **60** which have already been discussed, a stiffener **94** is shown. The stiffener **94** is preferably made of ductile steel and is seamless. The stiffener **94** includes an outwardly extending flange **96** at a first end **98**. In some applications, and where codes permit, the plastic tube could be manufactured of such a material so that a stiffener is not required in order to plastically deform outwardly and force the first end **126** of the plastic tube **104** into the grooves **112** of the adaptor sleeve **58**. However, in the preferred embodiment, the stiffener **94** is utilized to plastically deform outwardly and force the first end **126** of the tube **104** into the grooves **112** as will be described below.

With continuing reference to FIGURE 5, an O-ring **100** is also shown as well as plastic tube **104**.

With particular reference to FIGURE 6, the adaptor sleeve **58** comprises a first end **106** and a second end **108**.

The adaptor sleeve **58** has an internal bore **109** to allow passage of a fluid, such as natural gas, from the tube **104** into the pipe nipple **54**. An outer diameter D1, of the first end **106** of the adaptor sleeve **58** is adapted to fit within an inside diameter of the second end **68** of the pipe nipple **54**. Similarly, an outer diameter D2 of the second end **108** of the adaptor sleeve **58** is adapted to fit within an inside diameter of the first end **74** of the casing **60**.

One of the important benefits of the invention is the provision of different outside diameters D1, D2, on either end of the adaptor sleeve **58**. The adaptor sleeve **58** is a relatively inexpensive component and enables a variety of different size pipe nipples **54** to be combined with a variety of different size casings **60**. For example, some codes require a minimum wall thickness in the riser outer conduit at the meter manifold. This thickness may exceed the allowable thickness of the casing wall. By way of example, a code might require that the pipe nipple **54** be manufactured of schedule 80 pipe, while the casing **60** could be required to be of schedule 40 pipe. By adjusting the outside diameter D2 of the second end **108** of the adaptor sleeve **58**, a thinner wall casing **60** may be coupled with a thicker wall pipe nipple **54**. The outside diameters of the casing **60** and the pipe nipple **54** can be chosen to be approximately equal, so that a flush appearance may be obtained at flange **70**. Cost savings result in that a less expensive casing can be utilized. Weld **78** is, as shown in FIGURE 6, nearly flush with the outside diameter of flange **70**.

The adaptor sleeve **58** comprises a flange **70** in its outer surface. In the preferred embodiment, shown in FIGURE 6, the flange **70** has a pipe nipple surface **71** separated from an angled casing side surface **72** by a plateau portion **76**. Within the plateau portion **76** is a locator groove **80**. The function of the locator groove **80** is to aid in registering the tube **104** against the internal stop surface **120**. The internal stop surface **120** will be discussed later. In the preferred embodiment, the transverse plane passing through the center of locator groove **80** is exactly ¼ in. from internal stop surface **120**.

An interior surface **110** of the adaptor sleeve **58** comprises a series of grooves **112**. As will be explained below, the plastics tube **104** is forced into engagement with the annular grooves **112** to produce the metal-to-plastic seal of the invention.

The interior surface **110** of the adaptor sleeve **58** further comprises a stiffener groove **118**. The stiffener groove **118** selectively receives flange **96** of the first end **98** of the stiffener **94**. The stiffener groove **118** creates an internal stop surface **120**. The internal stop surface **120** has the important function of correctly positioning a first end **126** of the plastic tube **104** within the adaptor sleeve **58** before the plastic tube **104** is compressed outwardly into the grooves **112**. The position of first end **126** of plastic tube **104** against the grooves **112** is important because accurate placement is necessary to create an effective seal.

The adaptor sleeve **58** also comprises an O-ring wall **130** located adjacent the stiffener groove **118**. The O-ring wall **130** receives O-ring **100** in an interference fit when the various components are assembled into the riser **14**. The O-ring is effective to assist in forming the seal created when the plastic tube is compressed outwardly into grooves **112**. In some applications, the O-ring **100** will not be required.

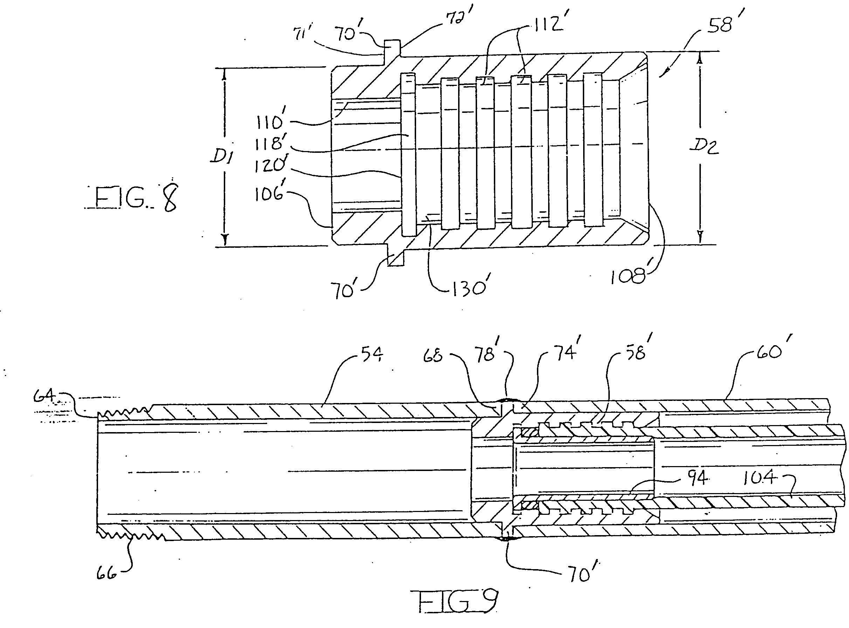

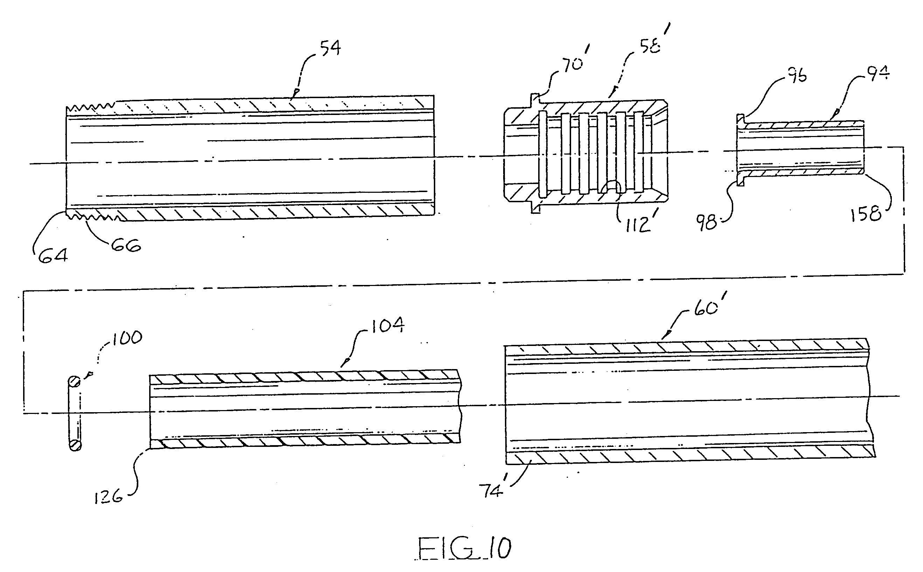

With reference to FIGURES 8-10, an alternate embodiment of the adaptor seal **58** prime and gas riser is shown. Most aspects of the gas riser assembly shown in FIGURES 8-10 are identical to the preferred embodiment shown in FIGURES 1-7 and are therefore indicated by the same reference character numbers. If a component is changed in the second embodiment, the changed component is indicated by a primed (**'**) reference character. With particular reference to FIGURE 8, the second embodiment of adaptor sleeve **58'** features a flange **70'** which does not incorporate a plateau portion **76** of the preferred adaptor sleeve flange 70. Instead, the second embodiment of flange **70'** features a pipe nipple side **71'** and a casing side **72'** which are both perpendicular to a longitudinal axis of the adaptor sleeve **58'**. The casing side surface **72'** is approximately in the same plane as that containing the internal stop surface **120'**.

With reference to FIGURES 3 and 9, the second embodiment adaptor sleeve **58'** is shown with a first end **74'** of the casing **60'** of equal diameter throughout its length. In contrast, in FIGURE 3, the first embodiment adaptor sleeve **58** is shown with a casing **60** whose first end **74'** is flared outwardly at its end. The outward flare permits a thicker adaptor sleeve **58** to be used than is the case with adaptor sleeve **58'**. In the embodiment shown in FIGURE 9, the pipe nipple **54**, adaptor sleeve **58'**, and casing **60'** can be joined by a single weld **78'**.

### Description of the Preferred Assembly Method

With reference now to FIGURES 3-7, and particularly FIGURE 7, the preferred assembly method of the invention will be described.

The first assembly step is the joining together of the pipe nipple **54**, adaptor sleeve **58**, and casing **60**. Any type of securing means utilizing sound engineering judgement can be used, such as screwing the components together, welding, or some sort of appropriate adhesive. In the preferred embodiment, welding is used. The weld **77** is located at the pipe nipple side **71** of the flange **70** of the adaptor sleeve **58**. This weld **77** is leak-tested. A second weld **78** is made on the casing side surface **72** of the adaptor sleeve flange **70**. These steps are accomplished by inserting the first end **106** of the adaptor sleeve within the second end **68** of the pipe nipple **54** and inserting the second end **108** of the adaptor sleeve **58** within the first end **74** of the casing **60**. After such assembly, the second end **68** of the pipe nipple **54** lies adjacent the pipe nipple side **71** of flange **70** and the first end **74** of the casing **60** lies adjacent the casing side **72** of the flange **70**. The welds **77**, **78** are then put in place to secure the components **54**, **58** and **60** together.

Next, the welded outer assembly is secured in an associated fixture. In the preferred assembly method, locator groove **80** is captured in the fixture as by the use of a clamp seated within the groove. Once seated, the position of the internal stop surface is then fixed in location. An appropriate first rod **142** is inserted into the first end **64** of the nipple **54** and passed through the welded assembly until its first end **150** exits the second end **84** of the casing **60**.

A length of plastic tubing is drawn from an associated reel and cut to the desired length. This tubing will eventually become the plastic tube **104** and pigtail **90**. The length of the tubing is chosen so that the plastic tube and pigtail are of the desired length.

Next, the O-ring **100** is positioned closely adjacent the first end **126** of the plastic tube **104**.

While holding the O-ring **100** in place, the stiffener **94** is positioned so that the second end **158** of the stiffener **94** is inserted within the first end **126** of the tube **104**. The O-ring **100** is then captured in a position to lie between flange **96** of the stiffener and the first end **126** of the tube **104**.

The first end **126** of the tube **104** (along with the inserted stiffener **94** and the captured O-ring **100**) is inserted into the welded assembly (from right to left in FIGURE 7) until flange **96** seats against internal stop **120** of the adaptor sleeve **58**. The locator groove **80** in conjunction with the fixture makes it possible to cause the flange **96** to contact the internal stop **120** precisely by measuring travel distance of the tube within the welded outer assembly and without the necessity of "feeling" engagement. Alternately, the tube can be simply pushed in until the flange **96** hits the stop. In this position, the flange **96** of the stiffener **94** is received within the stiffener groove **118**, and the O-ring **100** engages the O-ring wall **130**.

With the end of the first rod **142** extending out of the right end of the plastic tube (as viewed in FIGURE 7), mandrel **140** is screwed onto threads on the first end **150** of the first rod **142**. In the preferred embodiment, second rod **154** is then attached to the mandrel and provides a mechanism to center the mandrel **140** within the assembly and to push the mandrel **140** in conjunction with a pulling force to be applied to first rod **142**.

Next, the first rod **142** is pulled through the assembly toward the first end **64** of the pipe nipple **54**, (right to left in FIGURE 7), thereby pulling mandrel **140** through the assembly as well. Because the outside diameter of the mandrel **140** is greater than the inside diameter of the stiffener **94**, the stiffener **94** is plastically deformed outwardly by the passage of the mandrel **140**. The outside diameter of the mandrel **140** is approximately equal to the inside diameter of the tube **104**. The deformation of the stiffener **94** forces the plastic tube **104** outwardly into grooves **112** of the adaptor sleeve **58**. While in the proposed method the mandrel is pulled, it should be understood that a pushing force on the mandrel may be used as applied to second rod **154**.

The final step in the assembly process is the bending of the riser assembly into an L-shape, such shape being shown in FIGURES 1-2. The lengths of the portions of the riser to be oriented vertically as well as horizontally may be selected as required by relevant municipal codes or customer preference.

The above-described method makes it possible to manufacture risers of a variety of sizes, wall thicknesses, and material constructions by proper selection of an adaptor sleeve **58** and associated components. Further, the provision of internal stop **120** within the adaptor sleeve **58** enables accurate placement of the components within the assembly prior to make up of the riser. Accurate placement of the components leads to a higher quality and a better performing seal.

In an alternate assembly method, an expandable mandrel may be used to deform outwardly the stiffener **94**.

In a still further alternate assembly method, the mandrel **140** may be passed through the assembly in the opposite direction as was discussed in the preferred assembly method above. In this method, the mandrel **140** is passed into a first end **64** of the pipe nipple **54** and through a first end **98** of the stiffener **94**. This method is currently not preferred since the pushing action of the mandrel **140** (from left to right in FIGURE 7) might tend to dislodge the first end **126** of the tube **104** from its preferred location within the adaptor sleeve **58**.

An alternate embodiment of the gas riser does not require the use of a stiffener **94**. Instead, the tube **104** is made of a material which can plastically deform into grooves **112** without the need for the plastic deformation of the ductile steel stiffener **94**.

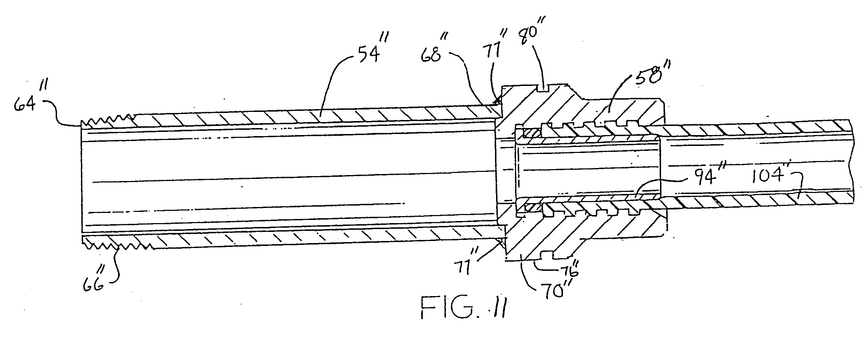

With reference to FIGURE 11, another embodiment of the invention is disclosed. This embodiment comprises a simple metal to plastic transition fitting or joint, rather than a gas riser. The primary difference is that the casing, normally required for gas riser applications, is not included in the invention disclosed in FIGURE 11. Instead, the metal pipe nipple **54''** is joined to the plastic tube **104''** via adaptor sleeve **58''**. Except for the lack of a casing, all elements of the embodiment shown in FIGURE 11 are identical to that of the preferred embodiment shown in FIGURES 1-7 and the like elements are indicated by like reference characters, except that the metal to plastic transition fitting disclosed in FIGURE 11 features double primed (**''**) reference characters.

The invention has been described with reference to a preferred embodiment. Obviously, modifications and alterations will occur to others upon a reading and understanding of this specification. It is intended to include all such modifications and alterations insofar as they come within the scope of the appended claims or the equivalents thereof.

## Claims

1. A method of assembling a metal-to-plastic transition fitting, said fitting comprising a pipe nipple (54), adaptor sleeve (58), and tube (104), said method comprising the steps of:
inserting a first end (106) of said adaptor sleeve (58) into a second end (68) of said pipe nipple (54);
securing said second end of said pipe nipple to said adaptor sleeve;
pushing a first end (126) of said tube (104) into a second end (108) of said adaptor sleeve (58) until said first end of said tube is adjacent securing means on an inner surface of said adaptor sleeve; and,
deforming said tube into sealing engagement with said securing means on said inner surface of said adaptor sleeve;
said tube (104) being deformed preferably by passing a mandrel (140) through a second end of said tube (148), past said first end of said tube, past said adaptor sleeve, and out a first end of said pipe nipple.

2. A method of assembling a metal-to-plastic transition fitting, said fitting comprising a pipe nipple (54), adaptor sleeve (58), tube (104), and stiffener (94), said method comprising the steps of:
inserting a first end (106) of said adaptor sleeve (58) into a second end (68) of said pipe nipple (54);
securing said second end of said pipe nipple to said adaptor sleeve;
inserting said stiffener (94) into a first end (126) of said tube (104);
pushing said first end of said tube into a second end (108)
of said adaptor sleeve (58) until said stiffener is adjacent securing means on an inner surface of said adaptor sleeve and preferably contacts an internal wall of said adaptor sleeve; and
passing a mandrel (140) through a second end of said tube, past said first end of said tube, past said stiffener and adaptor sleeve, and out a first end of said pipe nipple, thereby outwardly deforming said tube into sealing engagement with said securing means on said inner surface of said adaptor sleeve.

3. The method of claim 2 wherein said securing means comprises grooves (112) on said inner surface of said adaptor sleeve (58).

4. The method of claim 2 or 3 further comprising the steps of, after securing said second end (68) of said pipe nipple (54) to said first end (106) of said first end (106) of said adaptor sleeve (58):
passing a first end (150) of a rod (142) into said first end (64) of said pipe nipple (54), through said pipe nipple, tube (104), and out a second end (148) of said tube; and,
attaching said mandrel (140) on said first end of said rod;
a maximum outside diameter of said mandrel (140) preferably being greater than an inside diameter of said stiffener (94).

5. An assembled metal-to-plastic transition joint, said joint comprising:
a metal pipe nipple (54);
an adaptor sleeve (58) having a first end (64) and a second end (68) and an adaptor sleeve flange (70) therebetween, said adaptor sleeve having an inner cavity open to said second end, said cavity having grooves (112) in an inner side surface of said cavity, an interior surface of said cavity forming an internal stop surface (120), said first end of said adaptor sleeve received within a second end (68) of said pipe nipple (54) and said second end (108) of said sleeve received within a first end (74) of said casing (60), said second end of said pipe nipple being welded to said adaptor sleeve flange (70); and,
a plastic tube (104), a first end (126) of said tube being contiguous said internal stop surface (120), an outer surface of said tube near said first end being deformed into locking engagement with said grooves (112).

6. The transition joint of claim 5 further comprising:
a stiffener (94) received within said first end (128) of said tube (104), said stiffener being made of a ductile metal so as to be plastically deformed outwardly by application of outwardly directed forces, said plastic deformation causing said tube to sealingly engage said grooves (112) so that an associated fluid within said tube is prevented from leaking through said seal, said stiffener preferably being seamless.

7. A method of assembling a gas riser, said riser comprising a pipe nipple (54), casing (60), adaptor sleeve (58), and tube (104), said method comprising the steps of:
inserting a first end (106) of said adaptor sleeve (58) into a second end (68) of said pipe nipple (54);
inserting a second end (108) of said adaptor sleeve (58) into a first end (74) of said casing (60);
securing said second end of said pipe nipple and said first end of said casing to said adaptor sleeve;
pushing a first end (126) of said tube (104) into a second end (84) of said casing (60) until said first end of said tube is adjacent securing means on an inner surface of said adaptor sleeve; and,
deforming said tube into sealing engagement with said securing means on said inner surface of said adaptor sleeve, prefereably by passing a mandrel (140) through said tube.

8. The method of claim 7, wherein said tube (104) is deformed by passing a mandrel (140) through a second end of said tube, past said first end of said tube, past said adaptor sleeve, and out a first end of said pipe nipple, said mandrel preferably being an expanding mandrel.

9. The method of claim 7 or 8 further comprising, after securing said second end (68) of said pipe nipple (54) and said first end (74) of said casing (60) to said adaptor sleeve (58);
inserting a stiffener (94) into a first end (126) of said tube (104).

10. A method of assmebling a gas riser, said riser comprising a pipe pipple (54), casing (60), adaptor sleeve (58) tube (104) and stiffener (94), said method comprising the steps of:
inserting a first end (106) of said adaptor sleeve (58) into a second end (68) of said pipe nipple (54);
inserting a second end (108) of said apaptor sleeve (54) into a first end (74) of said casing (60);
securing said second end of said pipe nipple and said first end of said casing to said adaptor sleeve, preferably by welding;
inserting said stiffener (94) into a first end (126) of said tube (104);
pushing said first end (128) of said tube (104) into a second end (84) of said casing (60) until said stiffener (94) is adjacent securing means on an inner surface of said adaptor sleeve, said securing means preferably comprising grooves (112) on said inner surface of said adaptor sleeve; and
passing a mandrel (140) through a second end of said tube (104), past said first end of said tube, past said stiffener and adaptor sleeve, and out a first end of said pipe nipple, thereby outwardly deforming said tube into sealing engagement with said securing means on said inner surface of adaptor sleeve, a maximum outside diameter of said mandrel (140) preferable being greater than an inside diameter of said stiffener (94).

11. The method of claim 10 wherein said first end (126) of said tube (104) is pushed into said second end (84) of said casing (60) until said stiffener (94) contacts an internal wall of said adaptor sleeve (58).

12. The mod of claim 10 or 11 further comprising the steps of, after securing said second end (68) of said pipe nipple (54) to said first end (106) of said adaptor sleeve (58):
passing a first end (150) of a rod (142) into said first end (64) of said pipe nipple (54), through said pipe nipple and casing (60), out said second end of said casing, through said stiffener (94), into said first end of said tube (104) and out a second end of said tube; and,
attaching said mandrel (140) on said first end of said rod.

13. The method of claim 12 further comprising, after passing said first end (150) of said rod (142) through said stiffener (94):
passing said first end of said rod through an O-ring (100).

14. The method of one of claims 10 to 13 further comprising the step of, before inserting said stiffener (94) into a first (126) end of said tube (104):
positioning an O-ring (100) over said first end of said tube.

15. A method of assembling a gas riser, said riser comprising a tube and a metal pipe, the metal pipe having first and second pipe ends and having grooves on an inner surface, said method comprising the steps of:
passing a first end of an associated rod into said first pipe end and out said second pipe end;
passing said first end of said rod through an annular sleeve;
passing said first end of said rod through said tube;
attaching a mandrel to said rod, an outside diameter of said mandrel being greater than an inside diameter of said annular sleeve;
inserting a second end of said annular sleeve into a first tube end of said tube;
pushing said first tube end into said first pipe end until said annular sleeve and said first tube end are positioned adjacent said grooves on said inner surface of said pipe; and
passing said mandrel through said tube, out of said first tube end, and out of said second pipe end, thereby outwardly deforming said annular sleeve and said first tube end into sealing arrangement with said grooves on said inner surface of said pipe.

16. An adaptor sleeve (58) for joining pipe nipples (54) and casings (60) into gas risers, said adaptor sleeve comprising:
a generally cylindrical sleeve having a first end (106) and a second end (108), an outside diameter of said first end being sized to fit within an inside diameter of an associated pipe nipple, an outside diameter of said second end being sized to fit within an inside diameter of an associated casing, said first and second ends of said adaptor sleeve being preferably separated by an adaptor sleeve flange (70).

17. The adaptor sleeve of claim 16 further comprising:
a locator groove (80) in an outer surface of said adaptor sleeve (58), preferably in said adaptor sleeve flange (70).

18. The adaptor sleeve of claim 16 or 17 wherein said locator groove (80) is selectively receivable within an associated fixture to locate an internal stop surface (120) within said adaptor sleeve (58).

19. The adaptor sleeve of one of claims 16 to 18 wherein a casing side (72) of said adaptor sleeve flange (70) is angled outwardly.

20. The adaptor sleeve of one of claims 16 to 19 wherein a radial distance between an outer surface of said first end (106) and an outermost edge of said adaptor sleeve flange (70) is approximately equal to a wall thickness of said associated pipe nipple (54) and wherein a radial distance between an outer surface of said second end (108) and an outermost edge of said adaptor sleeve flange (70) is approximately equal to a wall thickness of said associated casing (60).

21. The adaptor sleeve of one of claims 16 to 20 further comprising:
grooves (112) in an interior surface of said adaptor sleeve (58), preferably of said second end (108) of said adaptor sleeve.

22. The adaptor sleeve of one of claims 16 to 21 further comprising:
an O-ring wall (130) in an interior surface of said adaptor sleeve (58), said O-ring wall selectively receiving an associated O-ring (100), said grooves (112) in said interior surface of said adaptor sleeve preferably being deeper than said O-ring wall.

23. The adaptor sleeve of one of claims 16 to 22 further comprising:
a stiffener groove (118) in an interior surface of said adaptor sleeve (38), said stiffener groove selectively receiving a stiffener flange (96) of an associated annular stiffener (94).

24. The adaptor sleeve of one of claims 16 to 23 further comprising:
an internal stop surface (120), said internal stop surface selectivel receiving a first end (126) of an associated tube (104) or a stiffener flange (96) of an associated stiffener(94) to fix or to register the location of said first end of said tube and said stiffener flange, respectively relative to said adaptor sleeve flange (70) or in relation to grooves (112) on an inner surface of said adaptor sleeve.

25. The adaptor sleeve of claim 24 wherein said internal stop surface (120) is in the plane of a casing side surface of said adaptor sleeve flange (70), said casing side surface being nearest said casing end and being perpendicular to a longitudinal axis of said adaptor sleeve (58).

26. An adaptor sleeve for gas risers, said adaptor sleeve (58) comprising:
a first end and a second end (106, 108), said first end selectively affixable to a second end (68) of an associated pipe nipple (54) and said second end selectively affixable to a first end (74) of an associated casing (60), said sleeve having a bore (109) extending inwardly from said second end of said adaptor sleeve, said bore selectively receiving an associated tube (104), said sleeve having an internal stop surface (120) against which a first end of an associated tube is registrable, said sleeve having sealing means to sealingly engage an outer surface of said tube, said sealing means perferably comprising grooves (112) in an inner side surface of said bore.

27. A method of registering a plastic tube (104) within a gas riser assembly, said assembly comprising a casing (60) and an adaptor sleeve (58) with an internal stop surface (120), said method comprising the steps of:
inserting a first end (126) of said tube (104) into a second end (108) of said adaptor sleeve (58) until said first end of said tube rests against said internal stop surface of said adaptor sleeve; and,
securing said first end of said tube against said internal stop surface by sealingly engaging an outer surface of said tube with an inner surface of said casing.

28. An assembled plastic-to-metal transition joint for use in gas risers, said joint comprising:
a metal pipe nipple (54);
a metal casing (60);
an adaptor sleeve (58) having a first end (106) and a second end (108) and an adaptor sleeve flange (70) therebetween, said adaptor sleeve having an inner cavity open to said second end, said cavity having grooves (112) in an inner side surface of said cavity, an interior surface of said cavity forming an internal stop surface (120), said first end (106) of said adaptor sleeve (58) received within a second end (68) of said pipe nipple (54) and said second end (108) of said sleeve (58) received within a first end (74) of said casing (60), said second end of said pipe nipple and said first end of said casing being welded to said adaptor sleeve flange; and,
a plastic tube (104) within said casing and coaxial therewith, a first end (126) of said tube (104) being contiguous said internal stop surface (120), an outer surface of said tube near said first end being deformed into locking engagement with said grooves (112), said engagement preventing axial movement of said tube within said casing.

29. The transition joint of claim 28 further comprising:
a stiffener (94) received within said first end (126) of said tube (104), said stiffener (94) being made of a ductile metal so as to be plastically deformed outwardly by applciation of outwardly directed forces, said plastic deformation causing said tube to sealingly engage said grooves (112) so that an associated fluid within said tube is prevented from leaking through said seal.

30. A gas riser comprising:
a pipe nipple (54) having first and second ends (64, 68); an adaptor sleeve (58) having first and second ends (106, 108), said first end (106) of said adaptor sleeve (58) being received within said second end (68) of said pipe nipple (54), said adaptor sleeve having a bore (109) therethrough, said bore having inner walls;
a casing (60) having a first and second end (74, 84), said first end (74) of said casing (60) receiving said second (108) end of said adaptor sleeve (58); and
a tube (104) having a first end (126) and a second end, said first end of said tube being received within and sealed to said inner walls of said adaptor sleeve;
a pipe nipple wall thickness of said pipe nipple (54) preferably varying from a casing wall thickness of said casing (60).

31. The gas riser of claim 30 wherein said inner surface of said adaptor (58) comprises:
grooves (112), said first end (126) of said tube (104) sealingly intermeshed with said grooves; and
preferably an internal stop surface (120) within said bore (109), said first end of said tube abutting said internal stop surface.

32. The gas riser of claims 30 or 31 wherein said tube (104) further comprises:
a pigtail (90), said pigtail extending from said second end (84) of said casing (60) to said second end of said tube (104), a length of said pigtail extending beyond said second end of said casing, said second end of said tube sealingly affixable to an associated pipe; and
preferably a slip seal, said slip sealing sealing said second end of said casing to said tube.

33. A gas riser comprising:
a pipe nipple (54), said pipe nipple having a first and second end (64, 68), said first end (64) of said pipe nipple being threaded for threaded engagement with an associated gas meter manifold;
an adaptor sleeve (58), said adaptor sleeve having a first end (106) and a second end (108) separated by an adaptor sleeve flange (70), said adaptor sleeve, flange extending about an exterior surface of said adaptor sleeve, said adaptor sleeve also comprising a bore (109) extending therethrough, said bore having an inner surface, said inner surface comprising grooves (112) and an internal stop surface (120), said first end (106) of said adaptor sleeve (58) being received within said second end (68) of said pipe nipple (54);
a casing (60), said casing having first and second ends (74, 84), said first end (24) of said casing (60) receiving said second end (108) of said adaptor sleeve (58), said first end of said casing abutting a casing side (72) of said adaptor sleeve flange (70), and said second end (68) of said pipe nipple (54) abutting a pipe nipple side (71) of said flange (70);
a tube (104), said tube having a first and second end (126, 148) said first end (126) of said tube received within said casing (60) and said first end of said tube abutting said internal stop surface (120) of said adaptor sleeve, said second end (148) of said tube extending beyond said second end (84) of said casing and selectively attached to an associated plastic pipe;
a slip seal (82), said slip seal sealingly joining said second end (84) of said casing (60) to said tube (104); and
a stiffener (94), said stiffener received within said first end (126) of said tube (104), said stiffener being seamless and having a flange (96) at a first end, said stiffener being plastically deformable outwardly against an interrior surface of said tube, thereby plastically deforming said first end (126) of said tube (104) into sealing engagement with said grooves (112) on said inner surface of said adaptor sleeve (58).
